# EUROPEAN PATENT SPECIFICATION

(11) **EP 2 981 362 B1**
(45) Date of publication and mention of the grant of the patent: **19.04.2017**
(21) Application number: 14716025.3
(22) Date of filing: 18.03.2014
(51) Int. Cl.: B02C 18/36, A22C 17/00

(54) **ADJUSTABLE CUTTING KNIFE**
VERSTELLBARES SCHNEIDMESSER
LAME DE COUPE AJUSTABLE

(30) Priority: 03.04.2013 IT RM20130191
(43) Date of publication of application: 10.02.2016
(73) Proprietor: Evolution S.r.l., 40069 Zola Predosa (Bo) (IT)
(72) Inventor: QUADRANA, Marcello, I-40069 Zola Predosa (BO) (IT)
(74) Representative: Fiammenghi, Eva
(86) International application number: PCT/IB2014/059929
(87) International publication number: WO 2014/162220

(56) References cited:
- EP-A1- 0 884 106
- BE-A- 502 689
- CH-A- 394 854
- DE-C- 647 684
- DE-C- 802 044
- US-A- 3 631 909
- US-A- 5 092 528

## Description

### Field of the art

The cutting blades for meat processing have always been characterized by a great rigidity and by a well determined consistency. Although countless variants have been developed, all the cutting blades used and patented to date have been characterized by a single underlying idea: presenting the meat to be cut with a very solid, rigid and thick blade, therefore capable of impacting the mass of meat in a monolithic and stable manner. However, this causes a significant dynamic, pressure and thermal stress both to the processed meat and the leading edge of the blade itself. The concept of rigidity has always been associated with the concept of efficiency and durability of any cutting blade. Therefore, in the known art, the more a blade was deemed capable of being rigid and non-deformable, the more it was deemed suitable for its task. The identity between rigidity and operating efficiency has therefore always been a constant factor in meat cutting blades and namely in cutting blades used for processing frozen pork meat. Despite the significant thicknesses attained by the cutting blades, it has been observed that these tend to deform under a load, also causing irregular wear of the blade itself. The wear of the blade does not only involve the loss of the cutting edge of the blade but also a significant weight loss in mass by the most stressed parts thereof. It is evident that since the contact with the meat itself causes the friction and the wear of the blades, the entire portion of the metal material removed will inevitably end up in the processed meat. The problem of the presence of metal residues in ground meat is still unresolved resulting in the intake by consumers of undesired amounts of metals dispersed in the ground meat processed and subsequently marketed.

A cutting knife with an adjustment element for adjusting the pressure exerted on the cutting blade is disclosed in CH 394 854 A.

### Description of the invention

The present invention is intended to describe an innovative adjustable cutting knife according to claim 1, which solves all the above problems, avoiding that the processed meat contains metals or whole fragments of blades. Underlying the present invention is the innovative concept of allowing the blades to suitably deform, according to the work loads they are subjected to. Therefore the present invention is intended to describe an adjustable cutting knife provided with at least one solid support, arranged radially around the central circular support and provided with at least one groove on which at least one adjustment element in inserted. Said adjustable cutting knife is characterized by having a threaded central cavity therein adapted to receive a screw for compressing the spring. Said spring, pressing on the cubic-shaped box containing the same, adjusts the pressure exerted on the lower part of said box, against the beveled seat suitably obtained in the semicircular portion of the cutting blade itself and which is inserted in said groove.

### Description of the explanatory drawings

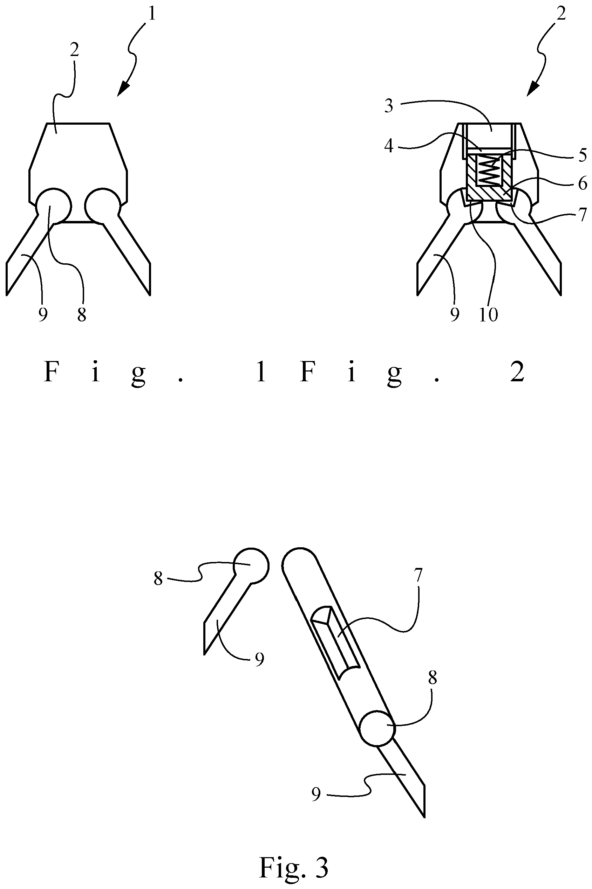

FIGURE 1: shows an adjustable cutting knife according to the present invention, wherein the adjustment element 2, a pair of cutting blades 9 each provided of a semicircular portion 8 are seen. Each semicircular portion 8 is provided with a beveled seat 7 provided with two squared faces 11 and 12;
FIGURE 2: shows the inner structure of the adjustment element 2, wherein the threaded central cavity 3, the screw 4 adapted to be threaded within said threaded central cavity 3, the spring 5 compressed by the fastening of said screw 4, the cylindrical or cubic box 6 on which the spring presses 5 are seen. It is also seen that the lower side 10 of the box 6 directly presses on the beveled seats 7 of the semicircular portion 8, exerting thereon a pressure directly proportional to that exerted by the screw 4 on the spring 5. Since the cutting blades 9 are integrated with said beveled seats 7, any force, even elastic, exerted on said beveled seats 7 is directly transmitted to the cutting blades themselves;
FIGURE 3: shows the cutting blade 9 according to the present invention, the semicircular portion 8 connected to said blade 9 is clearly seen, characterized by the presence of a bevel 7 adapted to receive the corner of the lower side 10 of the box 6. The bevel 7 will only be present at the action point of the cylindrical box 6;

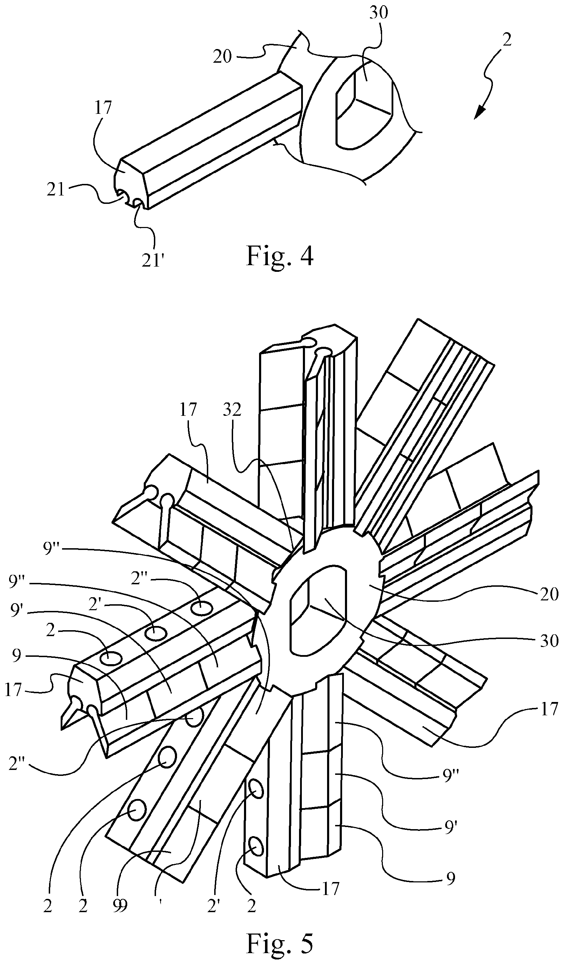

FIGURE 4: shows the solid support 17, stably connected to the central support 20 through the point of connection 32, on which at least one, two in the illustrated case, semicircular grooves 21 and 21' are obtained, adapted to respectively receive the semicircular portion 8 of the two cutting blades 9 and 9' which will naturally have a smaller diameter than that of the circular grooves 21 and 21';
FIGURE 5: shows an overview of the cutting knife according to the present invention in which it is seen that each blade 9 is decomposed into a plurality of blades 9', 9", 9"' inserted and overlapped in the semicircular portion 21 in an orderly manner. Each single blade 9', 9", 9"', is provided with an adjustment element 2 placed in the solid support 17;

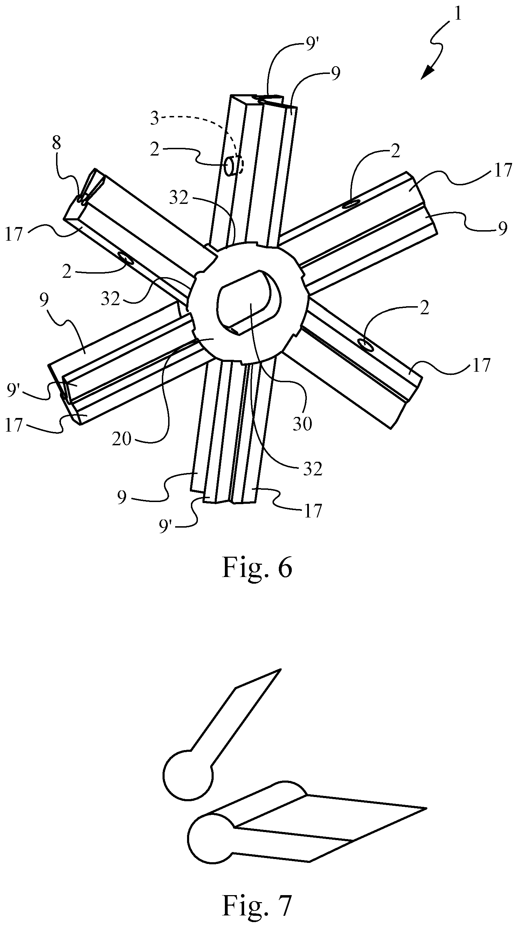

FIGURE 6: shows an overview according to the present invention wherein the hole 30 adapted to receive the rotation axis, the central support 20, connected with the rotation axis, on which at least two, six in the illustrated case, solid supports 17 are stably radially inserted. Each solid support 17 has at least one groove, in the illustrated case two semicircular grooves 21 and 21' each adapted to receive the semicircular portion 8 of the blades 9 and 9'. Each blade is provided with at least one adjustment element 2, adapted to adjust the stability and the flexibility of the blade defining a preload which keeps the pressure exerted by the blades on the fixed disks constant;
FIGURE 7: shows a cutting blade 9 wherein the circular portion 8 accommodating the bevel 7 is seen. The bevel 7 consists of two faces 11 and 12 adapted to accommodate the corner of the lower plane 10 of the box 6. The two faces 11 and 12 have an angle comprised between 90° and 110° therebetween, preferably they have an angle of 100° therebetween. The cylindrical box 6 is adapted to press on the faces 11 and 12 so as to keep the blades 9, 9' in a position within the solid support 17 such that a constant pressure is exerted on the fixed disks.

### Detailed description of the invention

The present invention is now described in its preferred embodiment, that is, when two blades 9 and 9' are adjusted simultaneously with a single adjustment element 2. The adjustable cutting knife 1 is provided with at least one solid support 17, preferably eight solid supports 17, arranged radially around the central circular support 20 and stably connected thereto through the connection point 32. The circular support 20 has a central hole 30 adapted to receive the rotation axis. A plurality of solid supports 17 is thus arranged radially on the circular support 20, each solid support being provided with at least one groove 21. It is on said groove that at least one adjustment element 2 is inserted. This adjustment element 2 is characterized by having a threaded central cavity 3 therein adapted to receive a screw 4 for compressing the spring 5. The spring 5, compressed by the fastening of the screw 4, presses in turn onto the box 6 adjusting the pressure exerted by the floor 10 of said box 6 against the beveled seat 7 obtained in the semicircular portion 8 of the cutting blade 9 inserted in said groove 21.

Since the adjustable cutting knife 1 according to the present invention has the beveled seat 7 obtained in the semicircular portion 8 of the blade 9 it will thus have a rigidity and a stability defined by the compression exerted by the spring 5. The bevel 7 is characterized by an angle between the two beveled sides 11 and 12 comprised between 90° and 110°, preferably the angle between the two faces is of about 100°.

The increasing pressure exerted by the screw 4, while it is progressively fastened along the thread 3, onto the spring below 5, causes the corresponding bias of the spring 5 onto the box 6. The floor 10 of said box 6 and namely the corners of said box 6, pressing against the two faces 11 and 12 of the bevel 7 obtained in the circular portion 8 of the blade 9, elastically stabilize the position of said blade 9. In fact, the greater the load exerted by the spring 5, the greater the resistance opposed by the blade 9 to an external stress as desired. In contrast, the more the screw 4 will be unfastened, the lower the load exerted on the spring 5 and the lower the pressure exerted by the box 6 on the bevel 7 and therefore, the lower the resistance that the blade 9 will exert on the portion of meat to be cut. Thus, by simply acting on the fastening or unfastening of the screw 4 along the graded thread 3, an increase or a decrease of the load exerted on the spring 5 will be obtained. The spring, in turn, pressing on the box 6, will determine the bending resistance of the blade 9 as a function of the pressure exerted by the box 6 onto the two faces 11 and 12 of the bevel 7. The opening angles of the blades 9 and 9' directly interact with the force with which they impact on the meat. Said force due to the action of the spring 5 remains constant avoiding undesired pressure peaks that may cause seizing and friction between the blades 9 and 9' and the fixed disk. The adjustable resistance of the blade 9 will be selected as a function of the consistency and characteristics of the meat to be processed. The elasticity produced by the present system for adjusting the blades 9 and 9' allows a drastic reduction of load peaks, obtaining a reduction of the maximum work loads and thus a reduction of the wear of the blades 9 and 9'. The reduction of the wear of said blades allows reducing the presence of metals in processed meat and also allows reducing the degradation of the proteins present in the meat itself.

With a single adjustment element 2 it is possible to adjust one or more blades simultaneously. In fact, it is the corner of the box 6 that operates within the bevel 7 and this, having a substantially cubic or cylindrical form, has the ability to adjust multiple blades simultaneously.

Moreover, it is possible to decompose the blade 9 into a plurality of blades of smaller size, each provided with an adjustment element 2 independent from the other adjustment elements. This embodiment allows calibrating the flexibility of the blades 9 as a function of their distance from the central body 20.

In fact, since the whole adjustable cutting knife 1 rotates, it will have, as a function of the distance from the rotation axis, a different speed and thus a different impact speed on the meat to be processed. Therefore, in order to obviate to this different rotation speed and to optimize cutting, it is necessary to have blades that modify their resistance as a function of the distance from the rotation centre.

## Claims

1. Adjustable cutting knife (1) provided with at least one solid support (17), preferably a plurality of solid supports (17), arranged radially around the central circular support (20) and each provided with at least one groove (21) on which there is inserted at least one adjustment element (2) comprising a threaded central cavity (3) therein, **characterized in that** said adjustment element is adapted to receive a screw (4) adapted to compress, being fastened and unfastened along said threaded cavity (3), a spring (5) which pressing on a box (6) adjusts the pressure exerted by the floor (10) of said box (6) against the beveled seat (7) obtained in a semicircular portion (8) of a cutting blade (9) inserted in said groove (21).

2. Adjustable cutting knife (1) according to the preceding claims wherein the beveled seat (7) obtained in the semicircular portion (8) of the blade (9), has an angle between the two beveled sides (11 and 12) comprised between 90° and 110°, preferably it has an angle of 100°.

3. Adjustable cutting knife (1) according to the preceding claims wherein the fastening and unfastening of the screw (4) within the threaded central cavity (3), respectively allows increasing or reducing the compression of the screw (4) which in turn determines the pressure exerted by the floor (10) of the box (6) against the beveled portion (7) of the semicircular portion (8) of the cutting blade (9).

4. Adjustable cutting knife (1) according to the preceding claims wherein each adjustment element (2) adjusts at least two cutting blades (9).

5. Adjustable cutting knife (1) according to the preceding claims wherein the adjustment element (2) is arranged and operates in any point of the beveled seat (7) obtained in the semicircular portion (8) of the cutting blade (9).

6. Adjustable cutting knife (1) according to the preceding claims wherein each cutting blade (9) is provided with at least one adjustment element (2).

7. Adjustable cutting knife (1) according to the preceding claims wherein the cutting blade (9) is constituted by a plurality of cutting blades (9', 9", 9"') inserted through the respective semicircular portions (8) within the groove (21) present on the solid support (17).

8. Adjustable cutting knife (1) according to the preceding claims wherein the number of solid supports (17) arranged radially around the central body (20) ranges from two to twenty, and preferably is eight.

9. Adjustable cutting knife according to the preceding claims wherein on each solid support (17) there is present at least one groove (21), preferably two grooves (21 and 21').

## Patentansprüche

1. Justierbares Schneidmesser (1), das mit mindestens einer stabilen Halterung (17), vorzugsweise mit mehreren stabilen Halterungen (17) versehen ist, die radial um eine zentrale kreisförmige Halterung (20) herum angeordnet ist bzw. sind und mit mindestens einer Nut (21) versehen ist bzw. jeweils versehen sind, an der mindestens ein Justierelement (2) eingebracht ist, das einen mit einem Gewindegang versehenen mittleren Hohlraum (3) umfasst, **dadurch gekennzeichnet, dass** das Justierelement dafür ausgelegt ist,
eine Schraube (4) aufzunehmen, die dafür ausgelegt ist, durch Ein- und Ausdrehen entlang des mit einem Gewindegang versehenen Hohlraums (3)
eine Feder (5) zu komprimieren, die durch Druck auf ein Behältnis (6) den Druck anpasst, der vom Boden (10) des Behältnisses (6) auf einen schrägen Sitz (7) ausgeübt wird, der in einem halbkreisförmigen Abschnitt (8) einer in die Nut (21) eingebrachten Messerklinge (9) erhalten wird.

2. Justierbares Schneidmesser (1) nach den vorangehenden Ansprüchen, wobei der schräge Sitz (7), der im halbkreisförmigen Abschnitt (8) der Klinge (9) erhalten wird, einen Winkel zwischen 90° und 110° zwischen den beiden schrägen Seiten (11) und (12) und vorzugsweise einen Winkel von 100° aufweist.

3. Justierbares Schneidmesser (1) nach den vorangehenden Ansprüchen, wobei das Ein- und Ausdrehen der Schraube (4) innerhalb des mit einem Gewindegang versehenen mittleren Hohlraums (3) die Verstärkung bzw. Verringerung der Kompression der Schraube (4) ermöglicht, die wiederum den Druck bestimmt, der vom Boden (10) des Behältnisses (6) auf den schrägen Abschnitt (7) des halbkreisförmigen Abschnitts (8) der Messerklinge (9) ausgeübt wird.

4. Justierbares Schneidmesser (1) nach den vorangehenden Ansprüchen, wobei jedes Justierelement (2) mindestens zwei Messerklingen (9) justiert.

5. Justierbares Schneidmesser (1) nach den vorangehenden Ansprüchen, wobei das Justierelement (2) an irgendeiner Stelle des schrägen Sitzes (7), der im halbkreisförmigen Abschnitt (8) der Messerklinge (9) erhalten wird, angeordnet ist und wirkt.

6. Justierbares Schneidmesser (1) nach den vorangehenden Ansprüchen, wobei jede Messerklinge (9) mit mindestens einem Justierelement (2) versehen ist.

7. Justierbares Schneidmesser (1) nach den vorangehenden Ansprüchen, wobei die Messerklinge (9) aus mehreren Messerklingen (9', 9", 9"') besteht, die durch die jeweiligen halbkreisförmigen Abschnitte (8) in die an der stabilen Halterung (17) vorhandene Nut (21) eingebracht werden.

8. Justierbares Schneidmesser (1) nach den vorangehenden Ansprüchen, wobei die Zahl der stabilen Halterungen (17), die radial um den mittleren Körper (20) herum angeordnet sind, im Bereich von zwei bis zwanzig liegt und vorzugsweise acht beträgt.

9. Justierbares Schneidmesser nach den vorangehenden Ansprüchen, wobei an jeder stabilen Halterung (17) mindestens eine Nut (21) vorhanden ist, vorzugsweise zwei Nuten (21 und 21') vorhanden sind.

## Revendications

1. Couteau ajustable (1) pourvu d'au moins un support solide (17), de préférence plusieurs supports solides (17) disposés radialement autour du support circulaire central (20) et pourvus chacun d'au moins une rainure (21) dans laquelle est inséré au moins un élément d'ajustement (2) qui renferme une cavité centrale filetée (3),
**caractérisé en ce que** l'élément d'ajustement est apte à recevoir une vis (4) apte à comprimer, en étant serrée et desserrée le long de ladite cavité filetée (3), un ressort (5) qui, en appuyant sur un boîtier (6), ajuste la pression exercée par le fond (10) dudit boîtier (6) contre la face d'appui biseautée (7) obtenue dans une partie semi-circulaire (8) d'une lame de coupe (9) insérée dans la rainure (21).

2. Couteau ajustable (1) selon les revendications précédentes, dans lequel la surface d'appui biseautée (7) obtenue dans la partie semi-circulaire (8) de la lame (9) présente un angle, entre les deux côtés biseautés (11 et 12), qui est compris entre 90° et 110°, et elle présente de préférence un angle de 100°.

3. Couteau ajustable (1) selon les revendications précédentes, dans lequel le serrage et le desserrage de la vis (4) dans la cavité centrale filetée (3) permettent respectivement d'augmenter ou de réduire la compression de la vis (4), qui détermine elle-même la pression exercée par le fond (10) dudit boîtier (6) contre la face d'appui biseautée (7) de la partie semi-circulaire (8) de la lame de coupe (9).

4. Couteau ajustable (1) selon les revendications précédentes, dans lequel chaque élément d'ajustement (2) ajuste au moins deux lames de coupe (9).

5. Couteau ajustable (1) selon les revendications précédentes, dans lequel l'élément d'ajustement (2) est disposé et a une action à n'importe quel point de la surface d'appui biseautée (7) obtenue dans la partie semi-circulaire (8) de la lame de coupe (9).

6. Couteau ajustable (1) selon les revendications précédentes, dans lequel chaque lame de coupe (9) est pourvue d'au moins un élément d'ajustement (2).

7. Couteau ajustable (1) selon les revendications précédentes, dans lequel la lame de coupe (9) est constituée par plusieurs lames de coupe (9', 9", 9"') insérées grâce aux parties semi-circulaires respectives (8) dans la rainure (21) présente sur le support solide (17).

8. Couteau ajustable (1) selon les revendications précédentes, dans lequel le nombre de supports solides (17) disposés radialement autour du corps central (20) va de deux à vingt, et est de préférence de huit.

9. Couteau ajustable (1) selon les revendications précédentes, dans lequel il est prévu sur chaque support solide (17) au moins une rainure (21), de préférence deux rainures (21 et 21').
